(19) Europäisches Patentamt
European Patent Office
Office européen des brevets

(11) EP 1 132 418 A1

(12) # EUROPÄISCHE PATENTANMELDUNG

(43) Veröffentlichungstag:
**12.09.2001 Patentblatt 2001/37**

(21) Anmeldenummer: **01104549.9**

(22) Anmeldetag: **05.03.2001**

(51) Int Cl.[7]: **C08J 5/18**, B32B 27/36, B32B 27/32, C08L 67/02 // (C08L67/02, 23:08)

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **10.03.2000 DE 10011652**

(71) Anmelder: **Mitsubishi Polyester Film GmbH 65203 Wiesbaden (DE)**

(72) Erfinder:
- **Peiffer, Herbert, Dr. 55126 Mainz (DE)**
- **Hilkert, Gottfried, Dr. 55291 Saulheim (DE)**
- **Jannsens, Bart, Dr. 65187 Wiesbaden (DE)**

(74) Vertreter: **Schweitzer, Klaus, Dr. et al Patentanwaltskanzlei Zounek, Industriepark Kalle-Albert, Gebäude H391 Rheingaustrasse 190-196 65174 Wiesbaden (DE)**

(54) **Biaxial orientierte Polyesterfolie mit hohem Weissgrad, Verfahren zu ihrer Herstellung und ihre Verwendung**

(57) Die vorliegende Anmeldung betrifft eine hochweiße, biaxial orientierte Polyesterfolie mit mindestens einer Basisschicht aus Polyesterrohstoff. Die Basisschicht der erfindungsgemäßen Polyesterfolie enthält zusätzlich ein Cycloolefincopolymer (COC) in einer Menge von 2 bis 60 Gew.-%, ein Weißpigment in einer Menge von 0,1 bis 25 Gew.-% und ggf. einen optischen Aufheller in einer Menge von 0 bis 5 Gew.-%, bezogen auf das Gewicht der Basisschicht. Dabei soll die Glasübergangstemperatur des COCs im Bereich von 70 bis 270 °C liegen. Die Folie eignet sich besonders zur Verpackung von licht- und/oder luftempfindlichen Nahrungs- und Genußmitteln oder für den Einsatz im industrieellen Bereich, z.B. bei der Herstellung von Prägefolien oder als Etikettenfolie, oder für Bildaufzeichnungspapiere, Druckbögen oder magnetische Aufzeichnungskarten oder zur Verarbeitung auf schnelllaufenden Maschinen zum Wickeln, Metallisieren, Drucken oder Kaschieren.

EP 1 132 418 A1

## Beschreibung

Die vorliegende Erfindung betrifft eine hochweiße, biaxial orientierte Polyesterfolie, die mindestens eine Schicht umfasst, welche einen Polyesterrohstoff, ein Cycloolefincopolymer (COC), mindestens ein Weißpigment und optional einen optischen Aufheller enthält. Die Erfindung betrifft ferner ein Verfahren zur Herstellung der Polyesterfolie sowie ihre Verwendung.

Weiße, biaxial orientierte Polyesterfolien sind nach dem Stand der Technik bekannt. Diese nach dem Stand der Technik bekannten Folien zeichnen sich entweder durch eine gute Herstellbarkeit, eine gute Optik oder durch ein akzeptables Verarbeitungsverhalten aus.

In der DE-A 2 353 347 wird ein Verfahren zur Herstellung einer ein- oder mehrschichtigen, milchigen Polyesterfolie beschrieben, das dadurch gekennzeichnet ist, dass man ein Gemisch aus Teilchen eines linearen Polyesters mit 3 bis 27 Gew.-% eines Homopolymeren oder Mischpolymeren von Ethylen oder Propylen herstellt, das Gemisch als Film extrudiert, den Film abschreckt und durch Verstrecken in senkrecht zueinander verlaufenden Richtungen biaxial orientiert und den Film thermofixiert. Nachteilig an dem Verfahren ist, dass bei der Herstellung der Folie anfallendes Verschnittmaterial, sogenanntes Regenerat, das im Wesentlichen ein Gemisch aus Polyesterrohstoff und Ethylen oder Propylen-Mischpolymer darstellt, nicht mehr für den Produktionsprozess eingesetzt werden kann, weil dadurch die Folie gelb wird. Das Verfahren ist damit aber unwirtschaftlich und die mit Regenerat produzierte, gelbliche Folie konnte sich am Markt nicht durchsetzen. Außerdem lässt der mit der Rezeptur erzielte Weißgrad der Folie noch sehr zu wünschen übrig.

In der EP-A 0 300 060 wird eine einschichtige Polyesterfolie beschrieben, die außer Polyethylenterephthalat noch 3 bis 40 Gew.-% eines kristallinen Propylenpolymeren und 0,001 bis 3 Gew.-% einer oberflächenaktiven Substanz enthält. Die oberflächenaktive Substanz bewirkt, dass die Anzahl der Vakuolen in der Folie ansteigt und gleichzeitig ihre Größe in gewünschtem Maße abnimmt. Hierdurch wird eine höhere Opazität und eine niedrigere Dichte der Folie erzielt. Nachteilig an der Folie bleibt weiterhin, dass bei der Herstellung der Folie anfallendes Regenerat (im Wesentlichen ein Gemisch aus Polyesterrohstoff und Propylen-Homopolymer) nicht mehr für den Produktionsprozess eingesetzt werden kann, weil dadurch die Folie gelb wird. Das Verfahren ist damit aber unwirtschaftlich und die mit Regenerat produzierte, gelbliche Folie konnte sich am Markt nicht durchsetzen. Außerdem lässt der mit der Rezeptur erzielte Weißgrad der Folie noch sehr zu wünschen übrig.

In der EP-A 0 360 201 wird eine mindestens zweischichtige Polyesterfolie beschrieben, die eine Basisschicht mit feinen Vakuolen enthält, deren Dichte zwischen 0,4 und 1,3 $kg/dm^3$ liegt und mindestens eine Deckschicht aufweist, deren Dichte größer als 1,3 $kg/dm^3$ ist. Die Vakuolen werden durch Zugabe von 4 bis 30 Gew.-% eines kristallinen Propylenpolymeren und anschließender biaxialer Streckung der Folie erzielt. Durch die zusätzliche Deckschicht wird die Herstellbarkeit der Folie besser (keine Streifenbildung auf der Oberfläche der Folie), die Oberflächenspannung wird erhöht und die Rauhigkeit der laminierten Oberfläche kann verringert werden. Nachteilig bleibt weiterhin, dass bei der Herstellung der Folie anfallendes Regenerat (im Wesentlichen ein Gemisch aus Polyesterrohstoff und Propylen-Homopolymer) nicht mehr für den Produktionsprozess eingesetzt werden kann, weil dadurch die Folie gelb wird. Das Verfahren ist damit aber unwirtschaftlich und die mit Regenerat produzierte Folie konnte sich am Markt nicht durchsetzen.

In der EP-A 0 795 399 wird eine zumindest zweischichtige Polyesterfolie beschrieben, die eine Basisschicht mit feinen Vakuolen enthält, deren Dichte zwischen 0,4 und 1,3 $kg/dm^3$ liegt und mindestens eine Deckschicht aufweist, deren Dichte größer als 1,3 $kg/dm^3$ beträgt. Die Vakuolen werden durch Zugabe von 5 bis 45 Gew.-% eines thermoplastischen Polymers zum Polyesterrohstoff in der Basis und anschließender biaxialer Streckung der Folie erzielt. Als thermoplastische Polymere werden u.a. Polypropylen, Polyethylen, Polymethyl-Penten, Polystyrol oder Polycarbonat genannt, wobei Polypropylen das bevorzugte thermoplastische Polymer ist. Durch die zusätzliche Deckschicht wird die Herstellbarkeit der Folie besser (keine Streifenbildung auf der Oberfläche der Folie), die Oberflächenspannung wird erhöht und die Rauhigkeit der laminierten Oberfläche kann den jeweiligen Erfordernissen angepasst werden. Eine weitere Modifizierung der Folie in der Basisschicht und/oder in den Deckschichten mit Weiß-Pigmenten (in der Regel $TiO_2$) und/oder mit optischen Aufhellern ermöglicht die Anpassung der Folieneigenschaften an die jeweiligen Anwendungserfordernisse. Nachteilig bleibt weiterhin, dass bei der Herstellung der Folie anfallendes Regenerat (im Wesentlichen ein Gemisch aus Polyesterrohstoff und dem additiven Rohstoff) nicht mehr für den Herstellprozess eingesetzt werden kann, weil dadurch die Folie undefiniert in der Farbe verändert wird, was in hohem Maße unerwünscht ist. Das Verfahren ist damit unwirtschaftlich und die mit Regenerat produzierte Folie konnte sich am Markt nicht durchsetzen. Außerdem lässt der mit der Rezeptur erzielte Weißgrad der Folie zu wünschen übrig.

In der DE-A 195 40 277 wird eine ein- oder mehrschichtige Polyesterfolie beschrieben, die eine Basisschicht mit feinen Vakuolen enthält, deren Dichte zwischen 0,6 und 1,3 $kg/dm^3$ liegt und eine Doppelbrechung in der Ebene aufweist, die von -0,02 bis 0,04 reicht. Die Vakuolen werden durch Zugabe von 3 bis 40 Gew.-% eines thermoplastischen Harzes zum Polyesterrohstoff in der Basis und anschließender biaxialer Streckung der Folie erzielt. Als thermoplastische Harze werden u.a. Polypropylen, Polyethylen, Polymethyl-Penten, cyclische Olefin-Polymere, Polyacrylharze, Polystyrol oder Polycarbonat genannt, wobei Polypropylen und Polystyrol bevorzugte Rohstoffe sind. Durch Einhalt der angegebenen Grenzen für die Doppelbrechung der Folie zeichnet sich die beanspruchte Folie insbesondere durch eine überlegene Reißfestigkeit und überlegene Isotropieeigenschaften aus. Nachteilig bleibt jedoch, dass bei der Herstellung der Folie anfallendes Regenerat nicht mehr für den Produktionsprozess eingesetzt werden kann, weil dadurch die Folie undefiniert in der Farbe verändert wird, was sehr unerwünscht ist. Das Verfahren ist damit unwirtschaftlich und die mit Regenerat produzierte Folie konnte sich am Markt nicht durchsetzen. Außerdem lässt der mit der Rezeptur erzielte Weißgrad der Folie zu wünschen übrig.

Die Aufgabe der vorliegenden Erfindung bestand darin, eine hochweiße, biaxial orientierte Polyesterfolie bereitzustellen, die sich durch eine verbesserte Herstellbarkeit, d.h. geringe Herstellkosten auszeichnet. Insbesondere soll gewährleistet sein, dass alles bei dem Herstellprozeß immanent anfallendes Verschnittmaterial (Regenerat) in einer Menge von 10 bis 70 Gew.-%, bezogen auf das Gesamtgewicht der Folie, wieder für den Herstellprozess eingesetzt werden kann, ohne dass dabei die physikalischen und optischen Eigenschaften der mit Regenerat hergestellten Folie nennenswert negativ beeinflußt werden. Insbesondere soll durch die Regeneratzugabe keine nennenswerte Gelbfärbung der Folie auftreten.

Diese Aufgabe wird erfindungsgemäß durch eine hochweiße, biaxial orientierte Polyesterfolie mit mindestens einer Basisschicht aus Polyesterrohstoff gelöst, deren kennzeichnende Merkmale darin zu sehen sind, dass zumindest die Basisschicht zusätzlich ein Cycloolefincopolymer (COC) in einer Menge im Bereich von 2 bis 60 Gew.-%, ein Weißpigment in einer Menge im Bereich von 0,1 bis 25 Gew.-% und einen optischen Aufheller in einer Menge im Bereich von 0 bis 5 Gew.-%, bezogen auf das Gewicht der Basisschicht enthält, wobei die Glasübergangstemperatur des Cycloolefincopolymeren (COC) im Bereich von 70 bis 270 °C liegt.

Unter einer hochweißen, biaxial orientierten Polyesterfolie im Sinne der vorliegenden Erfindung wird eine solche Folie bezeichnet, die einen Weißgrad von mehr als 80 %, bevorzugt von mehr als 85 % und besonders bevorzugt von mehr als 90 %, aufweist. Des Weiteren beträgt die Opazität der erfindungsgemäßen Folie mehr als 55 %, bevorzugt mehr als 60 % und besonders bevorzugt mehr als 65 %.

Zur Erzielung des gewünschten Weißgrades der erfindungsgemäßen Folie soll die Menge an COC in der Basisschicht größer als 2 Gew.-% sein, andernfalls ist der Weißgrad kleiner als 70 %. Ist die Menge an COC andererseits größer als 60 Gew.-%, dann lässt sich die Folie nicht mehr wirtschaftlich herstellen, da sie sich nicht mehr verfahrenssicher verstrecken lässt.

Weiterhin ist es notwendig, dass die Glasübergangstemperatur des eingesetzten COCs größer als 70 °C ist. Andernfalls, wenn die Glasübergangstemperatur des eingesetzten COCs kleiner als 70 °C ist, ist das Rohstoffgemisch schlecht verarbeitbar, weil es sich nur noch schlecht extrudieren läßt. Der gewünschte Weißgrad wird nicht mehr erreicht und das eingesetzte Regenerat führt zu einer Folie, die zu einer erhöhten Gelbfärbung neigt. Ist andererseits die Glasübergangstemperatur des ausgewählten COCs größer als 270 °C, dann wird sich die Rohstoffmischung im Extruder nicht mehr ausreichend homogenisieren lassen. Dies hat dann eine Folie mit unerwünscht inhomogenen Eigenschaften zur Folge.

In der bevorzugten Ausführungsform der erfindungsgemäßen Folie liegt die Glasübergangstemperatur der verwendeten COCs in einem Bereich von 90 bis 250 °C und in der besonders bevorzugten Ausführungsform in einem Bereich von 110 bis 220 °C.

Überraschenderweise wurde gefunden, dass durch den Zusatz eines COCs in der vorstehend beschriebenen Weise eine weiße, opake Folie hergestellt werden kann.

Entsprechend der Menge und der Art des zugegebenen COCs kann der Weißgrad und die Opazität der Folie exakt eingestellt und den jeweiligen Anforderungen angepasst werden. Durch diese Maßnahme ist es weitgehend möglich, auf andere gängige weiß- und opakmachende Additive weitgehend zu verzichten.

Alle diese beschriebenen Merkmale waren nicht vorhersehbar. Dies um so mehr, da COCs zwar offensichtlich mit Polyethylenterephthalat weitgehend inkompatibel sind, bekanntlich aber mit ähnlichen Streckverhältnissen und Strecktemperaturen orientiert werden wie Polyethylenterephthalat. Unter diesen Voraussetzungen hätte der Fachmann erwartet, dass bei diesen Herstellbedingungen keine weiße, opake Folie produziert werden kann.

In den bevorzugten und den besonders bevorzugten Ausführungsformen zeichnet sich die erfindungsgemäße Folie durch einen hohen/bzw. durch einen besonders hohen Weißgrad und eine hohe/bzw. durch eine besonders hohe Opazität aus, wobei die Farbänderung der Folie durch die Regeneratzugabe äußerst gering bleibt.

Die erfindungsgemäße Folie ist einschichtig oder mehrschichtig. Einschichtige Ausführungsformen sind wie die nachstehend beschriebene COC-haltige Schicht aufgebaut. Mehrschichtige Ausführungsformen sind mindestens zweischichtig und umfassen immer die COC-haltige Schicht und zumindest eine weitere Schicht, wobei die COC-haltige Schicht die Basisschicht ist, aber zusätzlich auch die Zwischen- oder die Deckschicht der mehrschichtigen Folie bilden kann. In einer bevorzugten Ausführungsform bildet die COC-haltige Schicht die Basisschicht der Folie mit mindestens einer, vorzugsweise mit beidseitigen Deckschicht/en, wobei gegebenenfalls einseitig eine oder beidseitig Zwischenschichten vorhanden sein kann/können. In einer weiteren bevorzugten Ausführungsform bildet die COC-haltige Schicht auch eine Zwischenschicht der Mehrschichtfolie. Weitere Ausführungsformen mit COC-haltigen Zwischenschichten sind fünfschichtig aufgebaut und haben neben der COC-haltigen Basisschicht beidseitig COC-haltige Zwischenschichten. In einer weiteren Ausführungsform kann die COC-haltige Schicht zusätzlich zur Basisschicht, ein- oder beidseitig Deckschicht/en auf der Basis- oder Zwischenschicht bilden. Die Basisschicht ist im Sinne der vorliegenden Erfindung diejenige Schicht, welche mehr als 50 % bis 100 %, vorzugsweise 70 bis 90 %, der Gesamtfoliendicke ausmacht. Die Deckschichten sind die Schichten, welche die äußeren Schichten der Folie bilden.

Die jeweilige Ausführungsform der Erfindung ist eine nicht transparente, opake Folie. Unter nicht transparenten Folien werden im Sinne der vorliegenden Erfindung solche Folien verstanden, deren Lichtdurchlässigkeit nach ASTM-D 1003-77 unter 95 %, vorzugsweise unter 75 %, liegt

Die COC-haltige Schicht (die Basisschicht) der erfindungsgemäßen Folie enthält einen Polyesterrohstoff, vorzugsweise ein Polyesterhomopolymeres, ein COC sowie gegebenenfalls weitere zugesetzte Additive in jeweils wirksamen Mengen. Im allgemeinen enthält diese Schicht mindestens 20 Gew.-%, vorzugsweise 40 bis 96 Gew. -%, insbesondere 70 bis 96 Gew. -%, Polyesterrohstoff, bezogen auf das Gewicht der Schicht.

Die Basisschicht der Folie enthält als Polyesterrohstoff einen thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (=Polyethylen-2,6-naphthalat, PEN), aus 1,4-Bis-hydroximethyl-cyclohexan und Terephthalsäure (=Poly-1,4-cyclohexandimethylenterephthalat, PCDT) sowie aus Ethylenglykol, Naphthalin-2,6-dicarbonsäure und Biphenyl-4,4'-dicarbonsäure (=Polyethylen-2,6-naphthalatbibenzoat, PENBB). Besonders bevorzugt sind Polyester, die zu mindestens 90 Mol-%, bevorzugt mindestens 95 Mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren, wie sie auch in der Schicht A (A=Deckschicht 1) oder der Schicht C (C=Deckschicht 2) einer mehrschichtigen Folie ABC (B=Basisschicht) vorkommen können.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, -O-, -S- oder $-SO_2-$ steht. Daneben sind auch Bisphenole der Formel $HO-C_6H_4-C_6H_4-OH$ gut geeignet.

Andere aromatische Dicarbonsäuren sind bevorzugt Benzoldicarbonsäuren, Naphtalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die $(C_3-C_{19})$-Alkandisäuren besonders geeignet, wobei der Alkanteil geradkettig oder verzweigt sein kann.

Die Herstellung der Polyester kann z.B. nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Erfindungsgemäß enthält die COC-haltige Schicht bzw. die Folie bei einschichtigen Ausführungsformen ein Cycloolefincopolymeres (COC) in einer Menge von minimal 2,0 Gew.-%, bevorzugt 4 bis 50 Gew.-%, besonders bevorzugt 6 bis 40 Gew.-%, bezogen auf das Gewicht der Schicht bzw. bezogen auf das Gewicht der Folie bei einschichtigen Ausführungsformen. Es ist wesentlich für die vorliegende Erfindung, dass das COC mit dem Polyethylenterephthalat nicht verträglich ist und mit diesem keine homogene Mischung in der Schmelze bildet.

Cycloolefinpolymere sind Homopolymerisate oder Copolymerisate, welche polymerisierte Cycloolefineinheiten und gegebenenfalls acyclische Olefine als Comonomer enthalten. Für die vorliegende Erfindung sind Cycloolefinpolymere geeignet, die 0,1 bis 100 Gew.-%, bevorzugt 10 bis 99 Gew.-%, besonders bevorzugt 50-95 Gew.-%, jeweils bezogen auf die Gesamtmasse des Cycloolefinpolymeren, polymerisierte Cycloolefineinheiten enthalten. Bevorzugt sind insbesondere Polymere, die aus den Monomeren der cyclischen Olefine der Formeln I, II, III, IV, V oder VI aufgebaut sind:

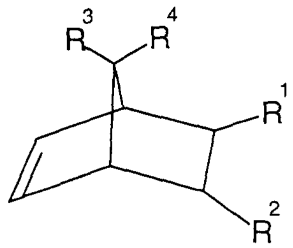

(I)

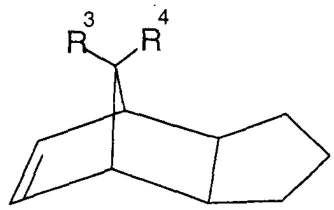

(II)

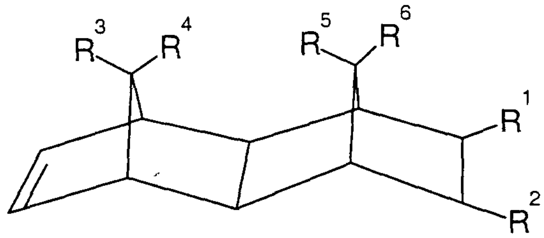

(III)

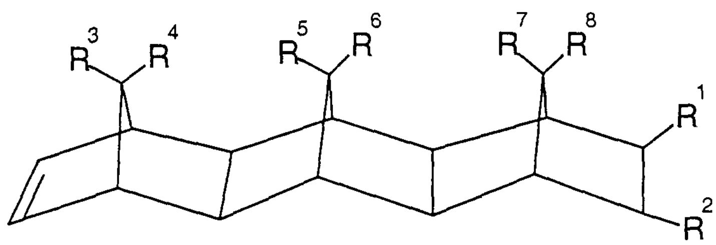

(IV)

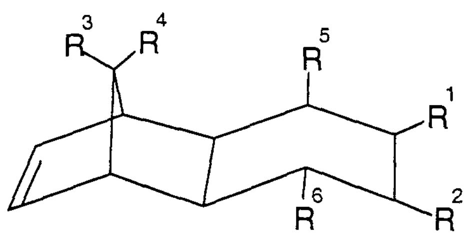

(V)

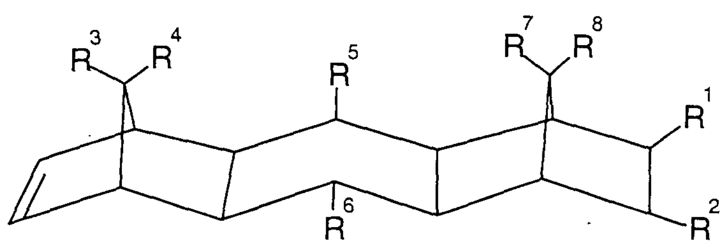

(VI)

In diesen Formeln sind $R^1$, $R^2$, $R^3$, $R^4$, $R^5$, $R^6$, $R^7$ und $R^8$ gleich oder verschieden und bedeuten ein Wasserstoffatom oder einen $C_1$-$C_{30}$-Kohlenwasserstoffrest; oder zwei oder mehrere der Reste $R^1$ bis $R^8$ sind cyclisch verbunden, wobei gleiche Reste in den verschiedenen Formeln gleiche oder unterschiedliche Bedeutung haben. $C_1$-$C_{30}$-

Kohlenwasserstoffreste sind beispielsweise lineare oder verzweigte $C_1$-$C_8$-Alkylreste, $C_6$-$C_{18}$-Arylreste, $C_7$-$C_{20}$-Alkylenarylreste oder cyclische $C_3$-$C_{20}$-Alkylreste oder acyclische $C_2$-$C_{20}$-Alkenylreste.

Gegebenenfalls können die COCs 0 bis 45 Gew.-%, bezogen auf die Gesamtmasse des Cycloolefinpolymeres, polymerisierte Einheiten mindestens eines monocyclischen Olefins der Formel VII enthalten:

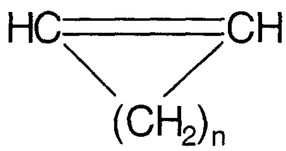

(VII)

Hierin ist n eine Zahl von 2 bis 10.

Gegebenenfalls können die COCs 0 bis 99 Gew.-%, bezogen auf die Gesamtmasse an COC, polymerisierte Einheiten eines acyclischen Olefins der Formel VIII enthalten:

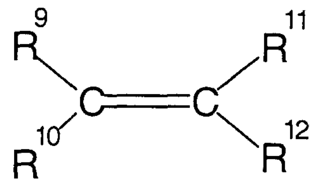

(VIII)

Hierin sind $R^9$, $R^{10}$, $R^{11}$, und $R^{12}$ gleich oder verschieden und bedeuten ein Wasserstoffatom oder $C_1$-$C_{10}$-Kohlenwasserstoffreste, z.B. einen $C_1$-$C_8$-Alkylrest oder $C_6$-$C_{14}$-Arylrest.

Ebenfalls prinzipiell geeignet sind Cycloolefinpolymere, welche durch ringöffnende Polymerisation mindestens eines der Monomere der Formeln I bis VI und anschließende Hydrierung erhalten werden.

Cycloolefinhomopolymere sind aus einem Monomeren der Formeln I bis VI aufgebaut. Diese Cycloolefin-Polymere sind für die Zwecke der vorliegenden Erfindung weniger geeignet. Für die Zwecke der vorliegenden Erfindung hingegen sind COCs geeignet, welche mindestens ein Cycloolefin der Formeln I bis VI und zusätzlich acyclische Olefine der Formel VIII als Comonomer enthalten. Dabei sind als acyclische Olefine solche bevorzugt, die 2 bis 20 C-Atome aufweisen, insbesondere unverzweigte acyclische Olefine mit 2 bis 10 C-Atomen wie beispielsweise Ethylen, Propylen und/oder Butylen. Der Anteil polymerisierter Einheiten acyclischer Olefine der Formel VIII beträgt bis zu 99 Gew.-%, bevorzugt 5 bis 80 Gew.-%, besonders bevorzugt 10 bis 60 Gew.-%, bezogen auf das Gesamtgewicht des jeweiligen COCs.

Unter den vorstehend beschriebenen COCs sind insbesondere diejenigen bevorzugt, die polymerisierte Einheiten polycyclischer Olefine mit Norbornengrundstruktur, besonders bevorzugt Norbornen oder Tetracyclododecen, enthalten. Besonders bevorzugt sind auch COCs, die polymerisierte Einheiten acyclischer Olefine, insbesondere Ethylen, enthalten. Wiederum besonders bevorzugt sind Norbornen/Ethylen- und Tetracyclododecen/Ethylen-Copolymere, welche 5 bis 80 Gew.-%, vorzugsweise 10 bis 60 Gew.-%, Ethylen enthalten (bezogen auf das Gewicht des Copolymeren).

Die vorstehend generisch beschriebenen Cycloolefinpolymeren weisen im allgemeinen Glasübergangstemperaturen zwischen -20 °C und 400 °C auf. Für die Erfindung sind COCs verwendbar, die eine Glasübergangstemperatur von größer als 70 °C, vorzugsweise größer als 90 °C und insbesondere größer als 110 °C aufweisen. Die Viskositätszahl (Dekalin, 135 °C, DIN 53 728) liegt zweckmäßiger weise zwischen 0,1 und 200 ml/g, bevorzugt zwischen 50 und 150 ml/g.

Die Herstellung der COCs geschieht durch eine heterogene oder homogene Katalyse mit metallorganischen Verbindungen und ist in einer Vielzahl von Dokumenten beschrieben. Geeignete Katalysatorsysteme basierend auf Mischkatalysatoren aus Titan- bzw. Vanadiumverbindungen in Verbindung mit Aluminiumorganylen werden in DD 109 224, DD 237 070 und EP-A-0 156 464 beschrieben. EP-A-0 283 164, EP-A-0 407 870, EP-A-0 485 893 und EP-A-0 503 422 beschreiben die Herstellung von COCs mit Katalysatoren, basierend auf löslichen Metallocenkomplexen. Auf die in obengenannten Schriften beschriebenen Herstellungsverfahren von COC wird hiermit ausdrücklich Bezug genommen.

Die COCs werden entweder als reines Granulat oder als granuliertes Konzentrat (Masterbatch) in die Folie eingearbeitet, indem das Polyestergranulat oder -pulver mit dem COC bzw. dem COC-Masterbatch vorgemischt und anschließend dem Extruder zugeführt wird. Im Extruder werden die Komponenten weiter vermischt und auf Verarbeitungstemperatur erwärmt. Dabei ist es für das erfindungsgemäße Verfahren zweckmäßig, dass die Extrusionstemperatur oberhalb der Glasübergangstemperatur $T_g$ des COCs liegt, im allgemeinen mindestens 5 K, vorzugsweise 10 bis 180 K, insbesondere 15 bis 150 K, über der Glasübergangstemperatur des COCs.

Für die Zwischenschichten und ggf. die Deckschicht C können prinzipiell die gleichen Polymeren verwendet werden, wie für die zuvor beschriebene Basisschicht B. Daneben können in dieser Deckschicht auch andere Materialien enthalten sein, wobei dann diese Deckschicht C bevorzugt aus einem Gemisch von Polymeren, einem Copolymeren oder einem Homopolymeren, bestehen, welches Ethylen-2,6-naphthalat-Einheiten und Ethylenterephthalat-Einheiten enthalten. Bis zu 30 Mol-% der Polymeren können aus weiteren Comonomeren (z.B. Ethylen-isophthalat-Einheiten) bestehen.

Die Basisschicht und die anderen Schichten können zusätzlich übliche Additive, wie Stabilisatoren, Antiblockmittel und andere Füller, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt.

Typische Antiblockmittel (in diesem Zusammenhang auch als Pigmente bezeichnet) sind anorganische und/ oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder vernetzte Polymerpartikel, z.B. Polystyrol- oder Acrylat-Partikel.

Als Additive können auch Mischungen von zwei und mehreren verschiedenen Antiblockmitteln oder Mischungen von Antiblockmitteln gleicher Zusammensetzung, aber unterschiedlicher Partikelgröße gewählt werden. Die Partikeln können den Polymeren der einzelnen Schichten der Folie in den jeweils vorteilhaften Mengen, z.B. als glykolische Dispersion während der Polykondensation oder über Masterbatche bei der Extrusion zugegeben werden. Als besonders geeignet haben sich Pigment-Konzentrationen von 0 bis 25 Gew.-% erwiesen (bezogen auf das Gewicht der jeweiligen Schicht). Eine detaillierte Beschreibung der Antiblockmittel findet sich beispielsweise in der EP-A-0 602 964.

Zu weiteren Verbesserung des Weißgrades der Folie enthält die Basisschicht erfindungsgemäß und/oder ggf. eine andere zusätzliche Schicht mindestens ein Weißpigment und optional einen optischen Aufheller.

Geeignete Weißpigmente sind vorzugsweise Titandioxid, Bariumsulfat, Calciumcarbonat, Kaolin, Siliciumdioxid, wobei Titandioxid und Bariumsulfat bevorzugt sind.

Die Titandioxidteilchen können aus Anatas oder Rutil bestehen, vorzugsweise überwiegend aus Rutil, welcher im Vergleich zu Anatas eine höhere Deckkraft zeigt. In bevorzugter Ausführungsform bestehen die Titandioxidteilchen zu mindestens 95 Gew.-% aus Rutil. Sie können nach einem üblichen Verfahren, z. B: nach dem Chlorid- oder dem Sulfat-Prozeß, hergestellt werden. Ihre Menge in der Basisschicht liegt zweckmäßigerweise im Bereich von 0,1 bis 25,0 Gew.-%, vorzugsweise von 0,2 bis 23,0 Gew.-%, insbesondere von 0,3 bis 22,0 Gew.-%, bezogen auf das Gesamtgewicht der Basisschicht. Die mittlere Teilchengröße geeigneter Weißpigmente ist relativ klein und liegt vorzugsweise im Bereich von 0,10 bis 0,30 um, gemessen nach der Sedigraphmethode.

Die Titandioxidteilchen können einen Überzug aus anorganischen Oxiden besitzen, wie er üblicherweise als Überzug für $TiO_2$-Weißpigment in Papieren oder Anstrichmitteln zur Verbesserung der Lichtechtheit eingesetzt wird. $TiO_2$ ist bekanntlich fotoaktiv. Bei Einwirkung von UV-Strahlen bilden sich freie Radikale auf der Oberfläche der Partikel. Diese freien Radikale können in die Polymermatrix wandern, was zu Abbaureaktionen und Vergilbung führt. Um dies zu vermeiden, können die $TiO_2$-Partikel oxydisch beschichtet werden. Zu den besonders geeigneten Oxiden für die Beschichtung gehören die Oxide von Aluminium, Silizium, Zink oder Magnesium oder Mischungen aus zwei oder mehreren dieser Verbindungen. $TiO_2$-Partikel mit einem Überzug aus mehreren dieser Verbindungen werden z. B. in der EP-A-0 044 515 und EP-A-0 078 633 beschrieben. Weiterhin kann der Überzug organische Verbindungen mit polaren und unpolaren Gruppen enthalten. Die organischen Verbindungen müssen bei der Herstellung der Folie durch Extrusion der Polymerschmelze ausreichend thermostabil sein. Polare Gruppen sind beispielsweise -OH; -OR; -COOX; (X = R, H oder Na, R = Alkyl mit 1 bis 34 C-Atomen). Bevorzugte organische Verbindungen sind Alkanole und Fettsäuren mit 8 bis 30 C-Atomen in der Alkylgruppe, insbesondere Fettsäuren und primäre n-Alkanole mit 12 bis 24 C-Atomen, sowie Polydiorganosiloxane und/oder Polyorganohydrogensiloxane wie z. B. Polydimethylsiloxan und Polymethylhydrogensiloxan.

Der Überzug für die Titandioxidteilchen besteht gewöhnlich aus 1 bis 12, insbesondere 2 bis 6 g anorganischer Oxide und/oder 0,5 bis 3, insbesondere 0,7 bis 1,5 g organischer Verbindung, bezogen auf 100 g Titandioxidteilchen. Der Überzug wird üblicherweise auf die Teilchen in wässriger Suspension aufgebracht. Die anorganischen Oxide können aus wasserlöslichen Verbindungen, z. B. Alkali-, insbesondere Natriumnitrat, Natriumsilikat (Wasserglas) oder Kieselsäure in der wäßrigen Suspension ausgefällt werden.

Unter anorganischen Oxiden wie $Al_2O_3$ oder $SiO_2$ sind auch die Hydroxide oder deren verschiedenen Entwässerungsstufen wie z. B. Oxidhydrat zu verstehen, ohne dass man deren genaue Zusammensetzung und Struktur kennt. Auf das $TiO_2$-Pigment werden nach dem Glühen und Mahlen in wäßriger Suspension die Oxidhydrate z. B. des Aluminiums und/oder Silicium gefällt, die Pigmente dann gewaschen und getrocknet. Diese Ausfällung kann somit direkt in einer Suspension geschehen, wie sie im Herstellungsprozeß nach der Glühung und der sich anschließenden

Naßmahlung anfällt. Die Ausfällung der Oxide und/oder Oxidhydrate der jeweiligen Metalle erfolgt aus den wasserlöslichen Metallsalzen im bekannten pH-Bereich, für das Aluminium wird beispielsweise Aluminiumsulfat in wäßriger Lösung (pH kleiner 4) eingesetzt und durch Zugabe von wäßriger Ammoniaklösung oder Natronlauge im pH-Bereich zwischen 5 und 9, vorzugsweise zwischen 7 und 8,5, das Oxidhydrat gefällt. Geht man von einer Wasserglas- oder Alkalialuminatlösung aus, sollte der pH-Wert der vorgelegten $TiO_2$-Suspension im stark alkalischen Bereich (pH größer 8) liegen. Die Ausfällung erfolgt dann durch Zugabe von Mineralsäure wie Schwefelsäure im pH-Bereich 5 bis 8. Nach der Ausfällung der Metalloxide wird die Suspension noch 15 min bis etwa 2 h gerührt, wobei die ausgefällten Schichten eine Alterung erfahren. Das beschichtete Produkt wird von der wäßrigen Dispersion abgetrennt und nach dem Waschen bei erhöhter Temperatur, insbesondere bei 70 bis 100 °C, getrocknet.

Die Folie enthält gegebenenfalls anstelle von Titandioxid Bariumsulfat als Pigment, wobei die Menge an Bariumsulfat vorzugsweise im Bereich von 0,1 bis 25 Gew.-%, besonders bevorzugt von 0,2 bis 23 Gew.-%, insbesondere von 0,3 bis 22 Gew.-%, bezogen auf das Gewicht der Basisschicht, liegt. Vorzugsweise wird auch das Bariumsulfat über die sogenannte Masterbatch-Technologie direkt bei der Folienherstellung zudosiert.

In einer bevorzugten Ausführungsform werden gefällte Bariumsulfat-Typen eingesetzt. Gefälltes Bariumsulfat erhält man aus Bariumsalzen und Sulfaten oder Schwefelsäure als feinteiliges farbloses Pulver, dessen Korngröße durch die Fällungsbedingungen zu steuern ist. Gefällte Bariumsulfate können nach den üblichen Verfahren, die in Kunststoff-Journal 8, Nr. 10, 30-36 und Nr. 11, 36-31 (1974) beschrieben sind, hergestellt werden.

Die mittlere Teilchengröße ist relativ klein und liegt vorzugsweise im Bereich von 0,1 bis 5 μm, besonders bevorzugt im Bereich von 0,2 bis 3 μm, gemessen nach der Sedigraphmethode. Die Dichte des verwendeten Bariumsulfates liegt zwischen 4 und 5 $g/cm^3$.

Die Folie enthält zusätzlich optional noch einen optischen Aufheller, wobei der optische Aufheller in Mengen von 0 bis 5 Gew.-%, insbesondere von 0,002 ppm bis 3 Gew.-%, besonders bevorzugt von 0,005 ppm bis 2,5 Gew.-%, bezogen auf das Gewicht der Basisschicht, eingesetzt wird. Vorzugsweise wird auch der optische Aufheller über die sogenannte Masterbatch-Technologie direkt bei der Folienherstellung zudosiert.

Die erfindungsgemäß geeigneten optischen Aufheller sind in der Lage, UV-Strahlen im Bereich von 360 bis 380 nm zu absorbieren und als längerwelliges, sichtbares blauviolettes Licht wieder abzugeben. Geeignete optische Aufheller sind Bis-benzoxazole, Phenylcumarine und Bis-sterylbiphenyle, insbesondere Phenylcumarin, besonders bevorzugt sind Triazin-phenylcumarin ® Tinopal (Ciba-Geigy, Basel, Schweiz), ® Hostalux KS (Clariant, Deutschland) sowie ® Eastobrite OB-1 (Eastman). Die erfindungsgemäße Folie enthält vorzugsweise eine Menge im Bereich von 0,0010 bis 5 Gew.-% an optischem Aufheller, der in dem kristallisierbaren Thermoplasten löslich ist.

Sofern zweckmäßig können neben dem optischen Aufheller auch noch in Polyester lösliche blaue Farbstoffe zugesetzt werden. Als geeignete blaue Farbstoffe haben sich Kobaltblau, Ultramarinblau und Anthrachinonfarbstoffe, insbesondere ® Sudanblau 2 (BASF, Ludwigshafen, Bundesrepublik Deutschland) erwiesen.

Die blauen Farbstoffe werden in Mengen im Bereich von 10 ppm bis 10.000 ppm, insbesondere 20 ppm bis 5.000 ppm, besonders bevorzugt 50 ppm bis 1.000 ppm, bezogen auf das Gewicht des kristallisierbaren Polyesters eingesetzt.

Erfindungsgemäß können Titandioxid oder das Bariumsulfat, der optische Aufheller und gegebenenfalls der blaue Farbstoff bereits beim Thermoplast-Rohstoffhersteller zudosiert werden oder bei der Folienherstellung über Masterbatch-Technologie in den Extruder dosiert werden.

Besonders bevorzugt ist die Zugabe des Titandioxids oder des Bariumsulfats, des optischen Aufhellers und gegebenenfalls des blauen Farbstoffes über die Masterbatch-Technologie. Die Additive werden in einem festen Trägermaterial voll dispergiert. Als Trägermaterialien kommen der Thermoplast selbst, wie z. B. das Polyethylenterephthalat, oder auch andere Polymere, die mit dem Thermoplasten ausreichend verträglich sind, in Frage.

Wichtig ist, dass die Korngröße und das Schüttgewicht des/der Masterbatches ähnlich der Korngröße und dem Schüttgewicht des Thermoplasten ist, so dass eine homogene Verteilung und damit eine homogener Weißgrad und somit eine homogene Opazität erreicht werden.

Die Gesamtdicke der Folie kann innerhalb weiter Grenzen variieren und richtet sich nach dem beabsichtigten Verwendungszweck. Die bevorzugten Ausführungsformen der erfindungsgemäßen Folie haben Gesamtdicken von 4 bis 400 um, wobei 8 bis 300 um, insbesondere 10 bis 300 μm, bevorzugt sind. Die Dicke der gegebenenfalls vorhandenen Zwischenschicht/en beträgt im allgemeinen jeweils unabhängig voneinander 0,5 bis 15 μm, wobei Zwischenschichtdicken von 1 bis 10 μm, insbesondere 1 bis 8 μm, bevorzugt sind. Die angegebenen Werte beziehen sich jeweils auf eine Zwischenschicht. Die Dicke der Deckschicht/en wird unabhängig von den anderen Schichten gewählt und liegt bevorzugt im Bereich von 0,1 bis 10 μm, insbesondere von 0,2 bis 5 μm, vorzugsweise von 0,3 bis 4 μm, wobei beidseitig aufgebrachte Deckschichten bezüglich Dicke und Zusammensetzung gleich oder verschieden sein können. Die Dicke der Basisschicht B ergibt sich entsprechend aus der Differenz von Gesamtdicke der Folie und der Dicke der aufgebrachten Deck- und Zwischenschicht/en und kann daher analog der Gesamtdicke innerhalb weiter Grenzen variieren.

Die Erfindung betrifft weiterhin ein Verfahren zur Herstellung der erfindungsgemäßen Polyesterfolie nach dem

an sich bekannten Extrusions- oder Koextrusionsverfahren. Im Rahmen dieses Verfahrens wird so vorgegangen, dass die der einschichtigen Folie/die den einzelnen Schichten der Folie entsprechende Schmelze/entsprechenden Schmelzen durch eine Flachdüse extrudiert/koextrudiert wird/werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht corona- oder flammbehandelt wird.

Die biaxiale Verstreckung wird im allgemeinen sequentiell durchgeführt. Dabei wird vorzugsweise zuerst in Längsrichtung (d.h. in Maschinenrichtung, =MD-Richtung) und anschließend in Querrichtung (d.h. senkrecht zur Maschinenrichtung, =TD-Richtung) verstreckt. Dies führt zu einer Orientierung der Molekülketten. Das Verstrecken in Längsrichtung erfolgt bevorzugt mit Hilfe zweier entsprechend dem angestrebten Streckverhältnis verschieden schnell rotierenden Walzen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den gewünschten Eigenschaften der Folie. Im allgemeinen wird die Längsstreckung bei 80 bis 130 °C und die Querstreckung bei 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1.

Die Verstreckung kann auch in einem Simultanstreckrahmen (Simultanstreckung) erfolgen, wobei die Anzahl der Streckschritte und die Abfolge (längs/quer) nicht von entscheidender Bedeutung für das Eigenschaftsbild der Folie ist. Günstig sind jedoch hier Strecktemperaturen ≤ 125 °C und besonders günstig ≤ 115 °C. Die Streckverhältnisse entsprechen denen im herkömmlichen sequenziellen Prozess.

Bei der nachfolgenden Thermofixierung wird die Folie etwa 0,1 bis 10 s lang bei einer Temperatur von 150 bis 250 °C gehalten. Anschließend wird die Folie abgekühlt und dann in üblicher Weise aufgewickelt.

Zur Einstellung weiterer gewünschter Eigenschaften kann die Folie chemisch behandelt werden oder auch corona- bzw. flammbehandelt sein. Die Behandlungsintensität ist so gewählt, dass die Oberflächenspannung der Folie im allgemeinen über 45 mN/m liegt.

Ebenso kann zur Einstellung weiterer Eigenschaften die Folie beschichtet werden. Typische Beschichtungen sind haftvermittelnde, antistatisch, schlupfverbessernd oder dehäsiv wirkende Schichten. Es bietet sich an, diese zusätzlichen Schichten über in-line coating mittels wässriger Dispersionen vor der Querverstreckung auf die Folie aufzubringen.

Der besondere Vorteil der erfindungsgemäßen Folie ist ihr sehr hoher Weißgrad und ihre hohe Opazität. Der Weißgrad der Folie beträgt mehr als 80 %, bevorzugt mehr als 85 % und besonders bevorzugt mehr als 90 %. Die Opazität der erfindungsgemäßen Folie beträgt mehr als 55 %, bevorzugt mehr als 60 % und besonders bevorzugt mehr als 65 %.

Ein weiterer besonderer Vorteil der Erfindung liegt darin, dass bei der Herstellung der Folie immanent anfallendes Regenerat in einer Konzentration von 10 bis 70 Gew.-%, bezogen auf das Gesamtgewicht der Folie, wieder für den Herstellprozess verwendet werden kann, ohne dass dabei die physikalischen oder optischen Eigenschaften der Folie nennenswert negativ beeinflußt werden. Insbesondere wird durch das Regenerat, das im wesentlichen aus Polyesterrohstoff und COC besteht, die Folie nicht undefiniert in der Farbe verändert, was allerdings bei den Folien nach dem Stand der Technik der Fall ist.

Darüber hinaus besteht ein Vorteil der Erfindung darin, dass die Herstellungskosten der erfindungsgemäßen Folie vergleichbar sind mit herkömmlichen opaken Folien nach dem Stand der Technik. Die sonstigen verarbeitungs- und gebrauchsrelevanten Eigenschaften der erfindungsgemäßen Folie bleiben im wesentlichen unverändert oder sind sogar verbessert.

Die erfindungsgemäße Folie eignet sich hervorragend zur Verpackung von licht- und/oder luftempfindlichen Nahrungs- und Genußmitteln. Daneben ist sie auch hervorragend für den Einsatz im industrieellen Bereich, z.B. bei der Herstellung von Prägefolien oder als Etikettenfolie, geeignet. Daneben ist die Folie natürlich besonders geeignet für Bildaufzeichnungspapiere, Druckbögen, magnetische Aufzeichnungskarten, um nur einige mögliche Anwendungen zu nennen.

Das Verabeitungs- und das Wickelverhalten der Folie, insbesondere auf schnelllaufenden Maschinen (Wickler, Metallisierer, Druck- und Kaschiermaschinen) ist ausgesprochen gut. Ein Maß für das Verarbeitungsverhalten ist der Reibungskoeffizient der Folie, der kleiner als 0,6 ist. Das Wickelverhalten wird neben einem guten Dickenprofil, einer hervorragender Planlage und niedriger Reibungskoeffizienten entscheidend durch die Rauhigkeit der Folie beeinflußt. Es hat sich herausgestellt, dass die Wickelung der erfindungsgemäßen Folie insbesondere dann gut ist, wenn unter Einbehalt der anderen Eigenschaften die mittlere Rauhigkeit in einem Bereich von 30 bis 1000 nm liegt. Die Rauhigkeit läßt sich u.a. durch Variation der COC-Konzentration den Verfahrensparametern beim Herstellungsprozess im angegebenen Bereich variieren.

Die nachstehende Tabelle (Tabelle 1) fasst die wichtigsten erfindungsgemäßen Folieneigenschaften noch einmal besonders illustrativ zusammen.

Tabelle 1

| | Erfindungsgemäßer Bereich | bevorzugt | besonders bevorzugt | Einheit | Messmethode |
|---|---|---|---|---|---|
| Formulierung | | | | | |
| Menge an COC in der Basisschicht | 2 - 60 | 4 - 50 | 6 - 40 | % | |
| Glasübergangstemperaturen des COC | 70 - 270 | 90 - 250 | 110 - 220 | °C | DIN 73 765 |
| Menge an Weißpigment in der Basisschicht | 0,1 - 25 | 0,2 - 23 | 0,3 - 22 | % | |
| Menge an optischem Aufheller in der Basisschicht | 0 - 5 | 0,002 - 3 | 0,005 - 2,5 | % | |
| weitere Folieneigenschaften | | | | | |
| Weißgrad | ≥80 | ≥85 | ≥90 | % | Berger |
| Opazität | ≥55 | ≥60 | ≥65 | | DIN 53 146 |
| Mittlere Rauhigkeit $R_a$ | 30 - 1000 | 35 - 900 | 40 - 800 | | DIN 4768, Cut-off von 0,25 mm |
| COF | ≤0,6 | ≤ 0,55 | ≤ 0,5 | | DIN 53 375 |
| Glanz, 60° | ≥10 | ≥15 | ≥20 | | DIN 67 530 |

Zur Charakterisierung der Rohstoffe und der Folien wurden die folgenden Meßwerte benutzt:

**SV-Wert (standard viscosity)**

Die Standardviskosität SV (DCE) wird, angelehnt an DIN 53726, in Dichloressigsäure gemessen. Die intrinsische Viskosität (IV) berechnet sich wie folgt aus der Standardviskosität

$$IV (DCE) = 6,907 \cdot 10^{-4} SV (DCE) + 0,063096$$

**Reibung**

Die Reibung wurde nach DIN 53 375 bestimmt. Die Gleitreibungszahl wurde 14 Tage nach der Produktion gemessen.

**Oberflächenspannung**

Die Oberflächenspannung wurde mittels der sogenannten Tintenmethode (DIN 53 364) bestimmt.

**Rauhigkeit**

Die Rauhigkeit $R_a$ der Folie wurde nach DIN 4768 bei einem Cut-off von 0,25 mm bestimmt.

**Weißgrad und Opazität**

Die Bestimmung des Weißgrades und der Opazität erfolgt mit Hilfe des elektrischen Remissionsphotometers "ELREPHO" der Firma Zeiss, Oberkochem (DE), Normlichtart C, 2? Normalbeobachter. Die Opazität wird nach DIN 53 146 bestimmt. Der Weißgrad wird als WG = RY + 3RZ - 3RX definiert.
WG = Weißgrad, RY, RZ, RX = entsprechende Reflexionsfaktoren bei Einsatz des Y-, Z- und X-Farbmessfilters. Als Weißstandard wir ein Pressling aus Bariumsulfat (DIN 5033, Teil 9) verwendet. Eine ausführliche Beschreibung ist z. B. in Hansl Loos "Farbmessung","Verlag Beruf und Schule, Itzehoe (1989), beschrieben.

**Lichtdurchlässigkeit**

Die Lichtdurchlässigkeit wird in Anlehnung an ASTM-D 1033-77 gemessen.

**Glanz**

Der Glanz wurde nach DIN 67 530 bestimmt. Gemessen wurde der Reflektorwert als optische Kenngröße für die Oberfläche einer. Folie. Angelehnt an die Normen ASTM-D 523-78 und ISO 2813 wurde der Einstrahlwinkel mit 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

**Glasübergangstemperatur**

Die Glasübergangstemperatur $T_g$ wurde anhand von Folienproben mit Hilfe der DSC (Differential Scanning Calorimetry) bestimmt (DIN 73 765). Verwendet wurde ein DSC 1090 der Firma DuPont. Die Aufheizgeschwindigkeit betrug 20 K/min und die Einwaage ca. 12 mg. Im ersten Aufheizvorgang wurde der Glasübergang $T_g$ ermittelt. Die Proben zeigten vielfach eine Enthalpierelaxation (ein Peak) zu Beginn des stufenförmigen Glasübergangs. Als $T_g$ wurde die Temperatur genommen, bei der die stufenförmige Veränderung der Wärmekapazität - unabhängig von der peakförmigen Enthalpierelaxation - ihre halbe Höhe im ersten Aufheizvorgang erreichte. In allen Fällen wurde nur eine einzige Glasübergangsstufe im Thermogramm beim ersten Aufheizen beobachtet.

**Beispiel 1** (erfindungsgemäß)

Chips aus Polyethylenterephthalat (hergestellt über das Umesterungsverfahren mit Mn als Umesterungskatalysator, Mn-Konzentration: 100 ppm) wurden bei 150 °C auf eine Restfeuchte von unterhalb 100 ppm getrocknet und dem Extruder für die Basisschicht B zugeführt. Daneben wurden Chips aus COC der Fa. Ticona: ® Topas 6015 (COC bestehend aus 2-Norbornen und Ethylen, siehe auch W. Hatke: Folien aus COC, Kunststoffe 87 (1997) 1, S. 58-62) mit einer Glasübergangstemperatur $T_g$ von etwa 160 °C ebenfalls dem Extruder für die Basisschicht B zugeführt. Der mengenmäßige Anteil an COC an der Gesamtfolie betrug 10 Gew.-%.
Außerdem enthielt die Basisschicht 5 Gew.-% Bariumsulfat (Blanc fixe XR-HX, Sachtleben Chemie) und 200 ppm optischen Aufheller (® Tinopal, Ciba-Geigy, Basel). Die Additive Bariumsulfat und optischer Aufheller werden als

Masterbatch zugegeben. Das Masterbatch setzt sich aus Klarrohstoff, 50 Gew.-% Bariumsulfat und 2000 ppm optischem Aufheller zusammen und wird mit 10 Gew.-% in die Basis dosiert.

Es wurde durch Extrusion und anschließende stufenweise Orientierung in Längs- und Querrichtung eine hochweiße, opake, einschichtige Folie mit einer Gesamtdicke von 23 µm hergestellt.

Basisschicht B, Mischung aus:

| | |
|---|---|
| 85,0 Gew.-% | Polyethylenterephthalat-Homopolymer mit einem SV-Wert von 800 |
| 10,0 Gew.-% | COC der Fa. Ticona, Topas 6015 |
| 5 Gew.-% | Masterbatch mit Bariumsulfat und optischem Aufheller |

Die Herstellungsbedingungen in den einzelnen Verfahrensschritten waren:

| | | |
|---|---|---|
| Extrusion | Temperaturen Basis-Schicht: | 280 °C |
| | Temperatur der Abzugswalze: | 30 °C |
| Längsstreckung | Temperatur: | 80 bis 125 °C |
| | Längsstreckverhältnis: | 4,2 |
| Querstreckung | Temperatur: | 80 bis 135 °C |
| | Querstreckverhältnis: | 4,0 |
| Fixierung | Temperatur: | 230 °C |
| Dauer | | 3 s |

Die Folie hatte die geforderten guten Eigenschaften und zeigte das gewünschte Handling und das gewünschte Verarbeitungsverhalten. Die erzielten Eigenschaften derart hergestellter Folien sind in der Tabelle 2 dargestellt.

**Beispiel 2** (erfindungsgemäß)

Im Vergleich zu Beispiel 1 wurde jetzt in die Basisschicht 50 Gew.-% Regenerat dazugegeben. Die Menge an COC in der damit hergestellten Basisschicht betrug wiederum 10 Gew.-% und die Menge an Bariumsulfat und optischem Aufheller waren gegenüber Beispiel 1 nicht geändert. Die Verfahrensparameter wurden im Vergleich zu Beispiel 1 ebenfalls nicht geändert. Es wurde die Gelbverfärbung der Folie visuell beobachtet. Anhand der Tabelle 2 sieht man, dass kaum eine Gelbverfärbung der Folie sichtbar geworden ist.

**Beispiel 3** (erfindungsgemäß)

Im Vergleich zu Beispiel 1 wurde jetzt eine Folie mit einer Dicke von 96 µm hergestellt. Die Menge an COC in der Basisschicht betrug 8 Gew.-%. Das Bariumsulfat und optischen Aufheller enthaltene Masterbatch wurde wieder mit 5 Gew.-% zur Basis dazugegeben. Die Verfahrensparameter wurden im Vergleich zu Beispiel 1 nicht geändert. Es wurde die Gelbverfärbung der Folie visuell beobachtet. Anhand der Tabelle 2 sieht man, dass keine Gelbverfärbung der Folie sichtbar geworden ist.

Basisschicht B, Mischung aus:

| | |
|---|---|
| 87,0 Gew.-% | Polyethylenterephthalat-Homopolymer mit einem SV-Wert von 800 |
| 8,0 Gew.-% | COC der Fa. Ticona, Topas 6015 |
| 5 Gew.-% | Masterbatch mit Bariumsulfat und optischem Aufheller |

**Beispiel 4** (erfindungsgemäß)

Im Vergleich zu Beispiel 3 wurde jetzt in die Basis B 50 Gew.-% Regenerat dazugegeben. Die Menge an COC in der Basisschicht betrug wiederum 8 Gew.-% und die Menge an Bariumsulfat und optischem Aufheller waren gegenüber Beispiel 1 nicht geändert.. Die Verfahrensparameter wurden im Vergleich zu Beispiel 1 nicht geändert. Es wurde die Gelbverfärbung der Folie visuell beobachtet. Anhand der Tabelle 2 sieht man, dass kaum eine Gelbverfärbung der Folie sichtbar geworden ist.

**Vergleichsbeispiel 1**

Es wurde Beispiel 1 aus der DE-A 2 353 347 nachgearbeitet. In Abänderung des Beispiels wurden zusätzlich

50 Gew.-% Regenerat mitverarbeitet. Anhand der Tabelle 2 sieht man, dass eine deutliche Gelbverfärbung der Folie sichtbar geworden ist.

Basisschicht B, Mischung aus:

| | |
|---|---|
| 47,5 Gew.-% | Polyethylenterephthalat-Homopolymer mit einem SV-Wert von 800 |
| 50,0 Gew.-% | Eigenregenerat (95 Gew.-% Polyester + 5 Gew.-% Polypropylen) |
| 2,5 Gew.-% | Polypropylen |

**Vergleichsbeispiel 2**

Es wurde Beispiel 1 aus der EP-A 0 300 060 nachgearbeitet. In Abänderung des Beispiels wurden zusätzlich 50 Gew.-% Regenerat mitverarbeitet. Anhand der Tabelle 2 sieht man, dass eine deutliche Gelbverfärbung der Folie sichtbar geworden ist

Basisschicht B, Mischung aus:

| | |
|---|---|
| 45,0 Gew.-% | Polyethylenterephthalat-Homopolymer mit einem SV-Wert von 800 |
| 50,0 Gew.-% | Eigenregenerat (95 Gew.-% Polyester + 5 Gew.-% Polypropylen) |
| 5,0 Gew.-% | Polypropylen |

**Vergleichsbeispiel 3**

Es wurde Beispiel 1 aus der EP-A 0 360 201 nachgearbeitet. In Abänderung des Beispiels wurden zusätzlich 50 Gew.-% Regenerat mitverarbeitet. Anhand der Tabelle 2 sieht man, dass eine deutliche Gelbverfärbung der Folie sichtbar geworden ist

Basisschicht B, Mischung aus:

| | |
|---|---|
| 40,0 Gew.-% | Polyethylenterephthalat-Homopolymer mit einem SV-Wert von 800 |
| 50,0 Gew.-% | Eigenregenerat (95 Gew.-% Polyester + 5 Gew.-% Polypropylen) |
| 10,0 Gew.-% | Polypropylen |

**Vergleichsbeispiel 4**

Es wurde Beispiel 1 aus der DE-A 195 40 277 nachgearbeitet. In Abänderung des Beispiels wurden zusätzlich 50 Gew.-% Regenerat mitverarbeitet. Anhand der Tabelle 2 sieht man, dass eine deutliche Gelbverfärbung der Folie sichtbar geworden ist

Basisschicht B, Mischung aus:

| | |
|---|---|
| 43,5 Gew.-% | Polyethylenterephthalat-Homopolymer mit einem SV-Wert von 800 |
| 50,0 Gew.-% | Eigenregenerat (95 Gew.-% Polyester + 5 Gew.-% Polystyrol) |
| 6,5 Gew.-% | Polystyrol |

Tabelle 2

| Beispiel | Dicke der Folie µm | Schichtaufbau und Schichtstärken | Polymeres Additiv zum Polyesterrohstoff | Konzentration des polymeren Additivs in Basisschicht % | Glasübergangstemperatur des polymeren Additivs °C | Weißgrad % | Opazität % | Beurteilung des Gelbgrades der Folie | Glanz der Folie | Reibung COF | Mittlere Rauhigkeit $R_a$ nm |
|---|---|---|---|---|---|---|---|---|---|---|---|
| B 1 | 23 | B | COC | 10 | 170 | 102 | 75 | ++ | 80 | 0,3 | 120 |
| B 2 | 23 | B | COC | 10 | 170 | 101 | 80 | + | 80 | 0,3 | 110 |
| B 3 | 96 | B | COC | 8 | 170 | 106 | 85 | ++ | 90 | 0,3 | 100 |
| B 4 | 96 | B | COC | 8 | 170 | 104 | 90 | + | 90 | 0,3 | 98 |
| VB 1 | 155 | B | Polypropylen | 5 | -10 | 80 | 70 | - | 46 | 0,45 | 410 |
| VB 2 | 100 | B | Polypropylen | 10 | -10 | 88 | 80 | - | 57 | 0,45 | 180 |
| VB 3 | 100 | ABA | Polypropylen | 20 | -10 | 92 | 89 | - | 54 | 0,25 | 370 |
| VB 4 | 125 | B | Polystyrol | 13 | 100 | 82 | 82 | - | 51 | 0,35 | 480 |

Zeichenerklärung für den Gelbgrad der produzierten Folien:

++ : keine Gelbfärbung ist zu erkennen

\+ : geringe Gelbfärbung ist zu erkennen

\- : deutliche Gelbfärbung ist zu erkennen

**Patentansprüche**

1. Hochweiße, biaxial orientierte Polyesterfolie umfassend mindestens eine Basisschicht aus Polyesterrohstoff, **dadurch gekennzeichnet, dass** zumindest die Basisschicht Cycloolefincopolymeres (COC) in einer Menge von 2 bis 60 Gew.-% und mindestens ein Weißpigment in einer Menge 0,1 bis 25 Gew.-%, bezogen auf das Gewicht dieser Schicht, enthält, wobei die Glasübergangstemperatur des COCs im Bereich von 70 bis 270 °C liegt.

2. Hochweiße Polyesterfolie nach Anspruch 1, **dadurch gekennzeichnet, dass** die Basisschicht zusätzlich einen optischen Aufheller in einer Menge von bis zu 5 Gew.-% enthält.

3. Hochweiße Polyesterfolie nach Anspruch 1 oder 2, **dadurch gekennzeichnet, dass** das COC Monomereinheiten enthält ausgewählt aus der Gruppe enthaltend Norbornen, Dimethyloctahydronaphthalin, Cyclopenten oder (5-Methyl)norbornen.

4. Hochweiße Polyesterfolie nach einem der Ansprüche 1 bis 3, **dadurch gekennzeichnet, dass** das COC eine Glasübergangstemperatur im Bereich von 90 bis 250 °C aufweist.

5. Hochweiße Polyesterfolie nach Anspruch 4, **dadurch gekennzeichnet, dass** das COC eine Glasübergangstemperatur im Bereich von 110 bis 220 °C aufweist.

6. Hochweiße Polyesterfolie nach einem oder mehreren der Ansprüche 1 bis 5, **dadurch gekennzeichnet, dass** die Folie einen Weißgrad von mehr als 80 % aufweist.

7. Hochweiße Polyesterfolie nach einem oder mehreren der Ansprüche 1 bis 6, **dadurch gekennzeichnet, dass** die Folie eine Opazität von mehr als 55 % aufweist.

8. Hochweiße Polyesterfolie nach einem oder mehreren der Ansprüche 1 bis 7, **dadurch gekennzeichnet, dass** die Folie einen Glanz von mehr als 10 aufweist.

9. Hochweiße Polyesterfolie nach einem oder mehreren der Ansprüche 1 bis 8, **dadurch gekennzeichnet, dass** auf der COC-haltigen Schicht eine Deckschicht angeordnet ist.

10. Hochweiße Polyesterfolie nach Anspruch 9, **dadurch gekennzeichnet, dass** zwischen der COC-haltigen Schicht und der Deckschicht eine zusätzliche Zwischenschicht angeordnet ist.

11. Verfahren zum Herstellen einer hochweißen Polyesterfolie nach einem der Ansprüche 1 bis 10, bei dem die der einschichtigen Folie/die den einzelnen Schichten der Folie entsprechende Schmelze/entsprechenden Schmelzen durch eine Flachdüse extrudiert/koextrudiert wird/werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht corona- oder flammbehandelt wird, **dadurch gekennzeichnet, dass** die biaxiale Verstreckung sequentiell durchgeführt wird, wobei zuerst in Längsrichtung und anschließend in Querrichtung verstreckt wird, wobei die Temperatur, bei der Längsstreckung in einem Bereich von 80 bis 130 °C und die bei der Querstreckung in einem Bereich von 90 bis 150 °C eingestellt wird und wobei das Längsstreckverhältnis in einem Bereich von 2,5:1 bis 6:1, bevorzugt von 3:1 bis 5,5:1, und das Querstreckverhältnis in einem Bereich von 3,0:1 bis 5,0:1, bevorzugt von 3,5:1 bis 4,5:1, eingestellt wird.

12. Verfahren zum Herstellen einer hochweißen Polyesterfolie nach einem der Ansprüche 1 bis 10, bei dem die der einschichtigen Folie/die den einzelnen Schichten der Folie entsprechende Schmelze/entsprechenden Schmelzen durch eine Flachdüse extrudiert/koextrudiert wird/werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht corona- oder flammbehandelt wird, **dadurch gekennzeichnet, dass** die Verstreckung in einem Simultanstreckrahmen erfolgt, wobei die Strecktemperaturen auf ≤ 125 °C, vorzugsweise < 115 °C eingestellt werden.

13. Verfahren nach Anspruch 11 oder 12, **dadurch gekennzeichnet, dass** die Folie nach der Verstreckung zur Thermofixierung über einen Zeitraum von 0,1 bis 10 s lang bei einer Temperatur im Bereich von 150 bis 250 °C gehalten wird, anschließend abgekühlt und dann aufgewickelt wird.

**14.** Verfahren nach einem der Ansprüche 11 bis 13, **dadurch gekennzeichnet, dass** die Folie zur Einstellung weiterer gewünschter Eigenschaften an mindestens einer ihrer Oberflächen chemisch behandelt oder corona- bzw. flammbehandelt wird, wobei die Behandlungsintensität ist so eingestellt wird, dass die Oberflächenspannung der Folie über 45 mN/m liegt.

**15.** Verfahren nach einem der Ansprüche 11 bis 14, **dadurch gekennzeichnet, dass** die Folie zur Einstellung weiterer Eigenschaften zusätzlich mit einer haftvermittelnden oder einer antistatischen oder einer schlupfverbessernden oder einer dehäsiv wirkenden Schicht überzogen wird, wobei diese zusätzlichen Schichten durch in-line coating mittels wässriger Dispersionen nach der Längsstreckung und vor der Querstreckung auf die Folie aufbracht werden.

**16.** Verfahren nach einem der Ansprüche 11 bis 15, **dadurch gekennzeichnet, dass** der Folie bei der Herstellung immanent anfallendes Regenerat in einer Menge im Bereich von 10 bis 70 Gew.-%, bezogen auf das Gesamtgewicht der Folie, zugesetzt wird.

**17.** Verwendung einer hochweißen Polyesterfolie nach einem der Ansprüche 1 bis 10 zur Verpackung von licht- und/ oder luftempfindlichen Nahrungs- und Genußmitteln oder für den Einsatz im industrieellen Bereich, z.B. bei der Herstellung von Prägefolien oder als Etikettenfolie, oder für Bildaufzeichnungspapiere, Druckbögen oder magnetische Aufzeichnungskarten.

**18.** Verwendung einer hochweißen Polyesterfolie nach einem der Ansprüche 1 bis 10 zur Verarbeitung auf schnelllaufenden Maschinen zum Wickeln, Metallisieren, Drucken oder Kaschieren.

Europäisches Patentamt

# EUROPÄISCHER RECHERCHENBERICHT

Nummer der Anmeldung
EP 01 10 4549

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | JP 10 060143 A (TOYOBO CO LTD)<br>3. März 1998 (1998-03-03)<br>* Absätze '0008!,'0009!,'0013!,'0015!,'0016!,'0024!-'0026!,'0034!-'0036!; Ansprüche 1,2; Tabelle 1 *<br>& DATABASE WPI<br>Section Ch, Week 199819<br>Derwent Publications Ltd., London, GB;<br>Class A17, AN 1998-212871<br>* Zusammenfassung *<br>--- | 1-12,17,18 | C08J5/18<br>B32B27/36<br>B32B27/32<br>C08L67/02<br>//(C08L67/02, 23:08) |
| X<br>A | JP 05 009319 A (UNITIKA LTD)<br>19. Januar 1993 (1993-01-19)<br>* Absätze '0008!,'0013!,'0014!,'0018!-'0023!,'0025!-'0027!,'0030!-'0032!,'0034!,'0036!,'0043!-'0046!; Ansprüche; Tabellen 1,3,4 *<br>& DATABASE WPI<br>Section Ch, Week 199308<br>Derwent Publications Ltd., London, GB;<br>Class A17, AN 1993-061728<br>* Zusammenfassung *<br>--- | 1-15,17,18<br>16 | |
| X | EP 0 522 758 A (UNITIKA LTD)<br>13. Januar 1993 (1993-01-13)<br><br>* Seite 2, Zeile 5 - Zeile 7; Ansprüche 1,3,4,6,9-12 *<br>* Seite 3, Zeile 18-25,29-35,42-56 *<br>* Seite 6, Zeile 41 - Seite 7, Zeile 21 *<br>* Seite 8, Zeile 3-5,14-17,28-58 *<br>* Beispiele 13,14; Tabellen 4,6,8 *<br>---<br>-/-- | 1-5, 9-12,17, 18 | **RECHERCHIERTE SACHGEBIETE (Int.Cl.7)**<br>B32B<br>C08J<br>C08L |

Der vorliegende Recherchenbericht wurde für alle Patentansprüche erstellt

| Recherchenort | Abschlußdatum der Recherche | Prüfer |
|---|---|---|
| MÜNCHEN | 21. Mai 2001 | Kanetakis, I |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

Europäisches Patentamt

# EUROPÄISCHER RECHERCHENBERICHT

Nummer der Anmeldung
EP 01 10 4549

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 786 495 A (OJI YUKA SYNT PAPER CO LTD) 30. Juli 1997 (1997-07-30)<br>* Seite 5, Zeile 3 - Zeile 12 *<br>* Seite 6, Zeile 20 - Zeile 24 *<br>* Seite 5, Zeile 42 - Seite 6, Zeile 6 *<br>* Ansprüche 1,3; Beispiele 5,6; Tabellen 1,3 * | 1-7, 9-13,15, 17,18 | |
| X | JP 05 140349 A (UNITIKA LTD) 8. Juni 1993 (1993-06-08)<br>* Absätze '0008!,'0009!,'0011!,'0012!,'0019!,'0021!, '0024!-'0026!,'0029!-'0031!,'0033!,'0036!, '0040!; Ansprüche; Tabellen 1-4 *<br>& DATABASE WPI<br>Section Ch, Week 199327<br>Derwent Publications Ltd., London, GB;<br>Class A23, AN 1993-216932<br>* Zusammenfassung * | 1-5, 9-13,17, 18 | RECHERCHIERTE SACHGEBIETE (Int.Cl.7) |
| P,X | EP 1 068 949 A (MITSUBISHI POLYESTER FILM GMBH) 17. Januar 2001 (2001-01-17)<br>* Absätze '0008!,'0010!,'0011!,'0017!-'0019!,'0040!- '0043!,'0045!-'0058!; Ansprüche; Beispiele 1-4; Tabellen 1,2 * | 1-18 | |

-/--

Der vorliegende Recherchenbericht wurde für alle Patentansprüche erstellt

| Recherchenort | Abschlußdatum der Recherche | Prüfer |
|---|---|---|
| MÜNCHEN | 21. Mai 2001 | Kanetakis, I |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt

**EUROPÄISCHER RECHERCHENBERICHT**

Nummer der Anmeldung
EP 01 10 4549

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | JP 05 230253 A (UNITIKA LTD)<br>7. September 1993 (1993-09-07)<br><br>* Absätze '0001!,'0009!,'0012!,'0022!-'0024!,'0027!-'0029!,'0031!,'0034!,'0040!; Ansprüche; Tabellen 1-4 *<br>& DATABASE WPI<br>Section Ch, Week 199340<br>Derwent Publications Ltd., London, GB;<br>Class A23, AN 1993-317613<br>* Zusammenfassung *<br>----- | 1,4,5, 9-13,17, 18 | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| MÜNCHEN | 21. Mai 2001 | Kanetakis, I |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 01 10 4549

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-05-2001

| Im Recherchenbericht angeführtes Patentdokument | Datum der Veröffentlichung | Mitglied(er) der Patentfamilie | Datum der Veröffentlichung |
|---|---|---|---|
| JP 10060143 A | 03-03-1998 | KEINE | |
| JP 05009319 A | 19-01-1993 | JP 3131466 B | 31-01-2001 |
| EP 0522758 A | 13-01-1993 | JP 5154972 A | 22-06-1993 |
| | | DE 69225643 D | 02-07-1998 |
| | | DE 69225643 T | 24-09-1998 |
| | | KR 203527 B | 15-06-1999 |
| | | US 5354595 A | 11-10-1994 |
| EP 0786495 A | 30-07-1997 | JP 9194693 A | 29-07-1997 |
| | | DE 69701644 D | 18-05-2000 |
| | | DE 69701644 T | 07-09-2000 |
| | | US 5677055 A | 14-10-1997 |
| JP 05140349 A | 08-06-1993 | KEINE | |
| EP 1068949 A | 17-01-2001 | DE 19932384 A | 18-01-2001 |
| JP 05230253 A | 07-09-1993 | KEINE | |

EPO FORM P0461

Für nähere Einzelheiten zu diesem Anhang : siehe Amtsblatt des Europäischen Patentamts, Nr.12/82